# EUROPEAN PATENT APPLICATION

(11) **EP 2 626 946 A1**
(43) Date of publication of application: **14.08.2013**
(21) Application number: 11830450.0
(22) Date of filing: 25.08.2011
(51) Int. Cl.: H01M 10/50, H01M 2/20, H01R 4/58

(54) **BUS BAR MODULE**

(30) Priority: 08.10.2010 JP 2010228554
(71) Applicant: AutoNetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Osaka-shi, Osaka 541-0041 (JP)
(72) Inventor: TAKASE Shinichi, Yokkaichi-shi Mie 510-8503 (JP); TAKATA Kensaku, Yokkaichi-shi Mie 510-8503 (JP); HIRAI Hiroki, Yokkaichi-shi Mie 510-8503 (JP)
(74) Representative: Brandl, Ferdinand Anton
(86) International application number: PCT/JP2011/069126
(87) International publication number: WO 2012/046517

(57) **Abstract**

It is an object of the present invention to prevent a temperature of a bus bar (10) from being raised excessively in a bus bar module (1) for a battery pack. A first vent hole (11) and a second vent hole (73) are formed in a portion surrounding each of hollow portions in bus bar housing portions (20) in the bus bar (10), a surrounding portion (21) and a cover member (70). The first vent hole (11) and the second vent hole (73) form an air flow path communicating from an upstream side to a downstream side in a predetermined air cooling direction (R1). In the case in which the air cooling direction (R1) is a direction in which an electrode (81) is extended from a battery cell (8), the first vent hole (11) is formed in a portion positioned in a clearance between the adjacent battery cells in each bus bar (10) and the second vent hole (73) is formed on the cover member (70).

## Description

### Technical Field

The present invention relates to a bus bar module having a plurality of bus bar housing portions for accommodating electrodes of two adjacent battery cells which are included in a battery pack and a bus bar for electrically connecting them.

### Background Art

An electrically driven vehicle such as an electric car and a hybrid car is provided with a battery pack including a plurality of battery cells. The battery pack includes a plurality of battery cells in which positive electrodes and negative electrodes are arranged adjacently to each other, and the positive electrodes and the negative electrodes of the two adjacent battery cells are coupled to each other through a bus bar formed by a conductor such as a copper member. Consequently, the battery cells are electrically connected in series so that a battery pack having a high output voltage is constituted.

As described in Patent Literature 1, in the battery pack, a plurality of bus bars is often held integrally by a nonconductive holder in a state in which they are arranged to be freely set into an electrode of each battery cell in the battery pack. The holder has a plurality of bus bar housing portions provided for the respective bus bars. The bus bar housing portion is constituted by a nonconductive member having a support portion for supporting the bus bar and a surrounding portion erected around the bus bar, for example, a resin molding member.

A combination of the bus bars for the battery pack and the nonconductive holder for holding the bus bars will be hereinafter referred to as a bus bar module. In the bus bar module, the holder has both a function for electrically insulating the bus bars from each other and a function for integrating the bus bars to facilitate handling.

As described in the Patent Literature 1, the bus bar for the battery pack is usually a plate-shaped member which is formed by a conductor, and there are provided two holes into which the electrodes of the battery cell are to be inserted. Moreover, a length of the bus bar for the battery pack is almost determined depending on a pitch between the electrodes of each battery cell in the battery pack. On the other hand, a width and a thickness of the bus bar for the battery pack are determined to ensure such a sectional area as not to excessively generate heat depending on a magnitude of electric power transmitted by the bus bar.

In a battery pack to be provided on a vehicle such as an electric car and a hybrid car, recently, a bus bar having a great thickness and width is being employed in order to prevent the excessive heat generation of the bus bar with increase in an output power.

### Prior Art Literature

### Patent Literature

Patent Literature 1 : Japanese Patent Application Laid-Open No. 2000 - 149909

### Summary of Invention

### Problems to be Solved by the Invention

In a conventional bus bar module for a battery pack, however, a bus bar is surrounded by a surrounding portion and a cover member in a bus bar housing portion. For this reason, an inner part of the bus bar housing portion is apt to be filled with heat generated from the bus bar. Therefore, the conventional bus bar module has a problem in that a temperature of the bus bar is apt to be raised. When the temperature of the bus bar is raised excessively, the performance of the battery pack is badly influenced.

It is an object of the present invention to prevent a temperature of a bus bar from being raised excessively in a bus bar module for a battery pack.

### Means for Solving the Problem

The bus bar module according to the present invention includes respective components shown in the following (1) to (3), and furthermore, has a structure shown in (4).
(1) The first component indicates a plurality of bus bars for electrically connecting electrodes of two adjacent ones of battery cells in a battery pack including the battery cells.
(2) The second component indicates a plurality of bus bar housing portions provided for the respective bus bars, having a surrounding portion formed cylindrically in a direction in which the electrode is extended from the battery cell around a hollow portion in which the electrode and the bus bar are disposed and a support portion for supporting the bus bar positioned on a first opening formed by the surrounding portion, and arranged along a line of the electrodes.
(3) The third component indicates a cover member for closing each second opening formed by the surrounding portion of each of the bus bar housing portions.
(4) A plurality of ventilation through holes forming an air flow path communicating from an upstream side to a downstream side in a predetermined air cooling direction is provided in a portion surrounding each of the hollow portions of the housing portions in the bus bar, the surrounding portion and the cover member.

For example, in the case in which the air cooling direction is a direction in which the electrode is extended from the battery cell, the ventilation through holes are formed in each of a portion positioned in a clearance between the adjacent battery cells in each of the bus bars and the cover member.

In the case in which the air cooling direction is a direction of arrangement of the electrodes, moreover, the ventilation through holes are formed in each of a portion at an upstream side and a portion at a downstream side in the air cooling direction in the surrounding portion in each of the bus bar housing portions.

### Effect of the Invention

In the bus bar module according to the present invention, the ventilation through hole is formed in the portion surrounding the hollow portion in which the bus bar is to be disposed in the bus bar and the bus bar housing portion. Consequently, there is formed the air flow path communicating from the upstream side to the downstream side in the predetermined air cooling direction. Therefore, permeability of the bus bar housing portion is enhanced so that the bus bar is cooled. As a result, it is possible to prevent the temperature of the bus bar from being raised excessively.

### Brief Description of Drawings

Fig. 1 is an exploded perspective view showing a main part of a bus bar module 1 according to a first embodiment of the present invention.
Fig. 2 is a plan view showing the main part of the bus bar module 1.
Fig. 3 is a plan view showing a position of a ventilation through hole in the main part of the bus bar module 1.
Fig. 4 is a plan view showing the bus bar module 1 other than a cover member attached to a battery pack.
Fig. 5 is a perspective view showing the bus bar module 1 attached to the battery pack.
Fig. 6 is an exploded perspective view showing a main part of a bus bar module 2 according to a second embodiment of the present invention.
Fig. 7 is a front view showing the bus bar module 1.
Fig. 8 is a perspective view showing the bus bar module 2 attached to a battery pack.

### Embodiment for Carrying Out the Invention

Embodiments according to the present invention will be described below with reference to the accompanying drawings. The following embodiments are specific examples of the present invention and do not restrict the technical scope of the present invention.

### <First Embodiment>

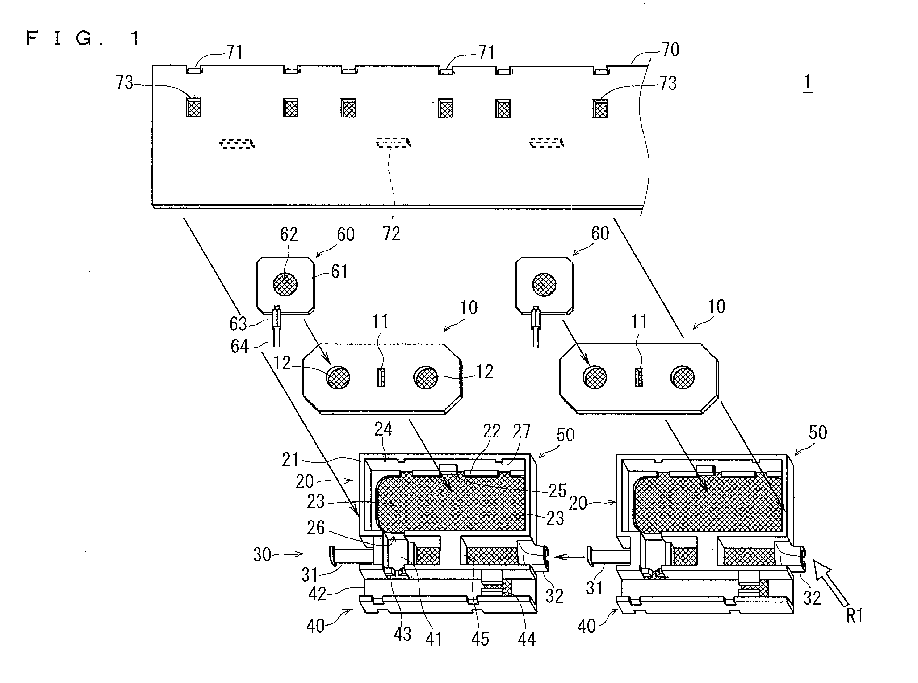

First of all, a structure of a bus bar module 1 according to a first embodiment of the present invention will be described with reference to Figs. 1 to 5. For convenience, in Figs. 1 to 3, mesh hatching is drawn in a portion in which an opening is formed in each member constituting the bus bar module 1.

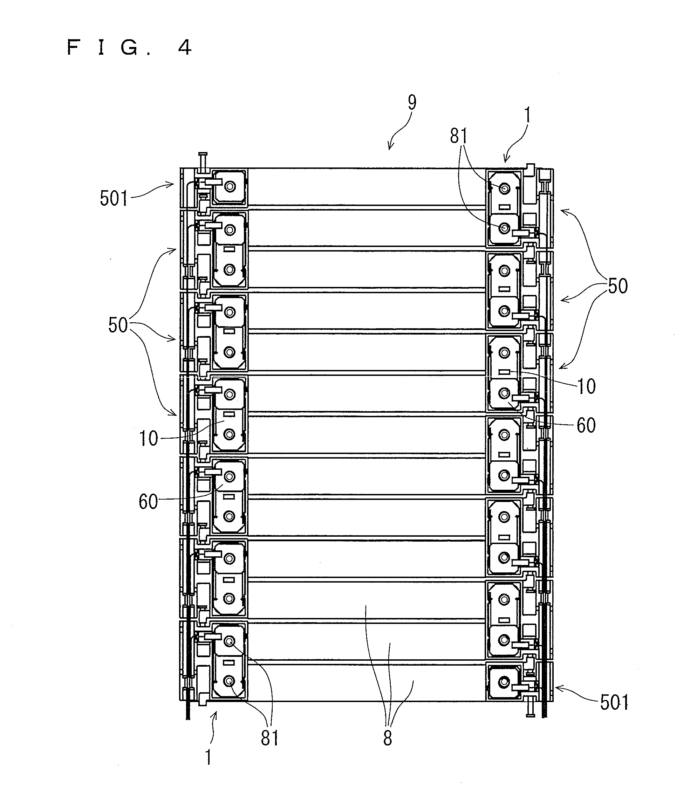

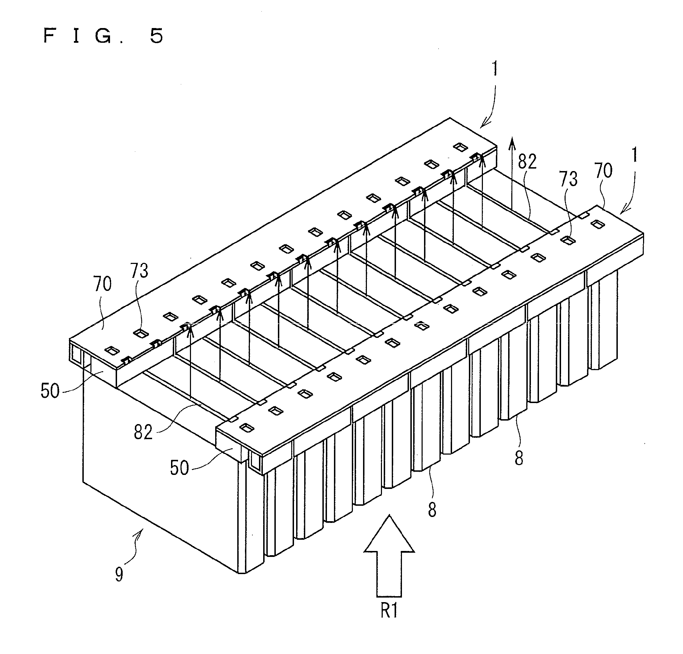

As shown in Figs. 4 and 5, the bus bar module 1 is attached to a battery pack 9 including a plurality of battery cells 8. In Fig. 4, a cover member 70 constituting the bus bar module 1 is not shown.

Moreover, the battery pack 9 is cooled by forced air cooling. In Fig. 5, a direction R1 shown in an arrow indicates a direction for sending cooling air to be sprayed onto the battery pack 9 which is a target for attachment of the bus bar module 1.

The air cooling direction R1 of the battery pack 9 which is the target of attachment of the bus bar module 1 is a direction toward an electrode plane from a surface at an opposite side to an electrode plane of the battery cell 8 to which the bus bar module 1 is to be attached. In other words, the air cooling direction R1 is a direction in which an electrode 81 in each battery cell 8 included in the battery pack 9 is extended. Accordingly, the cooling air sprayed onto the battery pack 9 reaches the bus bar module 1 via a clearance 82 between the battery cells 8.

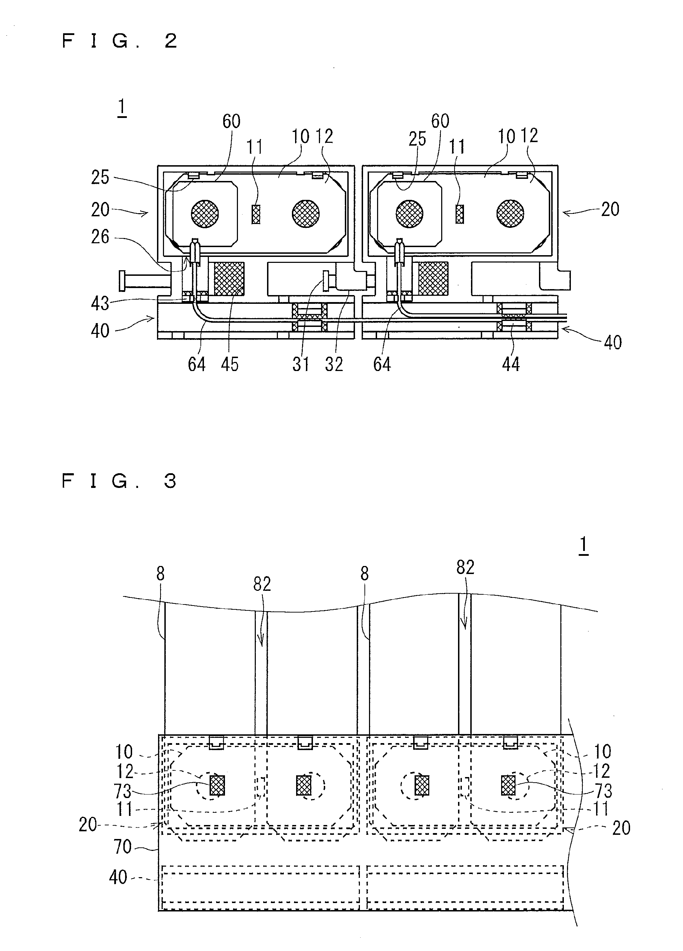

As shown in Figs. 1 and 2, the bus bar module 1 includes a plurality of bus bars 10, a plurality of bus bar holders 50 provided for the respective bus bars 10, a plurality of voltage detecting harnesses 60, and the cover member 70. The bus bar module 1 is provided on an electrically driven vehicle such as a hybrid car or an electric car and is attached to the battery pack 9 including the battery cells 8 (see Fig. 4). In Fig. 2, the cover member 70 constituting the bus bar module 1 is not shown.

### <Bus Bar>

The bus bar 10 is a bus bar for a battery pack, which is coupled to each of two electrodes 81 (a positive electrode and a negative electrode) of two adjacent ones of the battery cells 8 included in the battery pack 9 and serves to electrically connect the two electrodes 81. The bus bar 10 is a conductor member formed of a metal such as copper. Moreover, a surface layer of the bus bar 10 is subjected to plating such as tin plating in some cases. The battery cells 8 in the battery pack 9 are electrically connected in series through the bus bars 10.

As shown in Fig. 1, the bus bar 10 is a plate-shaped portion on which two electrode holes 12 for inserting the two electrodes 81 of the adjacent battery cells 8 therein are formed. Moreover, a first vent hole 11 to be a through hole is formed on the bus bar 10.

Fig. 3 is a plan view showing a part of the bus bar module 1 attached to the battery cell 8 of the battery pack 9. In Fig. 3, the bus bar 10, the bus bar housing portion 20 and an electric wire holding portion 40 which are disposed in positions hidden on the back side of the cover member 70 are shown in broken lines. As shown in Fig. 3, in the present embodiment, the first vent hole 11 is formed in a portion positioned on the clearance 82 between the adjacent battery cells 8 in the bus bar 10.

A screw thread is formed on the electrode 81 of the battery cell 8, and a nut which is not shown is attached to the electrode 81 inserted through the electrode hole 12 of the bus bar 10 so that the bus bar 10 is connected to the electrode 81.

### <Voltage Detecting Harness>

The voltage detecting harness 60 is a wire harness to be electrically connected to the electrode 81 of each battery cell 8 in order to detect a voltage in the electrode 81 of each battery cell 8 in the battery pack 9. The voltage detecting harness 60 includes a terminal 61 to be connected to the electrode 81 of the battery cell 8 and an electric wire 64 connected to the terminal 61. Moreover, a hole 62 for inserting the electrode 81 of the battery cell 8 is formed on a central part of the terminal 61. Furthermore, an edge portion of the terminal 61 is provided with a crimping portion 63 to which a distal end of the electric wire 64 is fixed and which is electrically connected to a core wire of the electric wire 64.

As shown in Fig. 2, the terminal 61 of the voltage detecting harness 60 is superposed on the bus bar 10 and is connected to the electrode 81 of the battery cell 8. In other words, the terminal 61 in the voltage detecting harness 60 is superposed on the bus bar 10 in such a manner that the position of the hole 62 is coincident with the position of one of the electrode holes 12 in the bus bar 10. Moreover, the electric wire 64 of the voltage detecting harness 60 is pulled out of the bus bar housing portion 20 and is thus provided.

### <Bus Bar Holder>

The bus bar holder 50 is a protector of the bus bar 10 which is disposed for each bus bar 10 and is provided with the bus bar housing portion 20 for individually accommodating the bus bar 10. The bus bar holder 50 is a nonconductive member which has the bus bar housing portion 20, a coupling mechanism 30 and the electric wire holding portion 40 formed therein.

The bus bar holder 50 is an integral molding member formed by a nonconductive resin such as polyamide (PA), polypropylene (PP), polybutylene terephthalate (PBT) or an ABS resin. Accordingly, all of the bus bar housing portion 20, the coupling mechanism 30 and the electric wire holding portion 40 are nonconductive members. It can also be supposed that the bus bar holder 50 is not the nonconductive member. For example, it can also be supposed that the bus bar holder 50 is a member obtained by carrying out insulating coating over a surface of a conductive member.

The bus bar housing portion 20 has a support portion 22 for supporting the bus bar 10 and a surrounding portion 21 erected around the bus bar 10 supported by the support portion 22. The surrounding portion 21 is formed cylindrically in a direction in which the electrode 81 is extended from the battery cell 8 around a hollow portion in which the electrode 81 of the battery cell 8 and the bus bar 10 are disposed. The surrounding portion 21 forms a first opening 23 to be an insertion port for the electrode 81 of the battery cell 8 and a second opening 24 to be an inlet port of the bus bar 10.

The support portion 22 is protruded from a surface on an inside of the surrounding portion 21 and is formed around the first opening 23. Accordingly, the support portion 22 supports an edge portion of the bus bar 10 positioned in the first opening 23. The bus bar 10 is held by the support portion 22 in a state in which the first opening 23 of the surrounding portion 21 is closed.

In addition, a bus bar engaging portion 25 to be caught on the edge portion of the bus bar 10 put on the support portion 22 is protruded from the surface on the inside of the surrounding portion 21. The bus bar engaging portion 25 abuts on an edge portion of an upper surface at an opposite side to a lower surface to be supported by the support portion 22 in the bus bar 10 put on the support portion 22. Consequently, the bus bar engaging portion 25 prevents the bus bar 10 from rising from the support portion 22.

Moreover, a cover engaging portion 27 to be caught on a part of the cover member 70 which will be described below is also formed on the surface at the inside of the surrounding portion 21. The cover engaging portion 27 holds the cover member 70 in a state in which the second opening 24 is closed.

Furthermore, the surrounding portion 21 is provided with a defect portion 26 communicating from an inside of the bus bar housing portion 20 to an outside thereof. The defect portion 26 forms a part of a wiring path for the electric wire 64 of the voltage detecting harness 60 which is to be pulled from an inside of the surrounding portion 21 to an outside thereof.

The coupling mechanism 30 in the bus bar holder 50 serves to couple the bus bar holder 50 to the other bus bar holder 50 disposed adjacently. In the example shown in Fig. 1, the coupling mechanism 30 is constituted by a bar-shaped protruded portion 31 having a wide stopper portion formed on a tip and receiving portion 32 provided with a groove in which the protrude portion 31 is to be fitted. The protruded portion 31 is formed with extension in a direction of arrangement of the bus bar holder 50. As shown in Fig. 2, a shaft portion of the protruded portions 31 in one of the two adjacent bus bar holders 50 is fitted in the groove of the receiving portion 32 of the other one thereof so that the two bus bar holders 50 are coupled to each other.

As shown in Figs. 4 and 5, moreover, three or more bus bar holders 50 are sequentially coupled to each other by means of the coupling mechanism 30. Consequently, the three or more bus bar holders 50 for connecting the electrodes 81 corresponding to a line are wholly coupled integrally. Furthermore, a bus bar holder 501 for a single electrode is attached to any of the electrodes 81 of the battery cells 8 to be electrically connected in series which has a ground level or a maximum electric potential. The bus bar holder 501 holds a bus bar on which a single hole corresponding to each of the electrodes is formed. The bus bar holder 501 has the same mechanism as the coupling mechanism 30 of the bus bar holder 50 and is coupled to any of the bus bar holders 50 which are coupled and are positioned on an end.

Moreover, the protruded portion 31 is formed in such a length as to enable sliding in the groove of the receiving portion 32 in a longitudinal direction of the protruded portion 31, that is, the direction of arrangement of the bus bar holder 50 in a state in which it is fitted in the groove of the receiving portion 32. By the sliding mechanism, there is absorbed an error of an interval between the electrodes 81 in the battery pack 9 and a dimension of the bus bar holder 50.

The electric wire holding portion 40 in the bus bar holder 50 is a portion for holding the electric wire 64 of the voltage detecting harness 60 which is pulled out of the bus bar housing portion 20. The electric wire holding portion 40 has a first electric wire support portion 41, a second electric wire support portion 42, a first electric wire pressing portion 43, a second electric wire pressing portion 44 and a coupling portion 45.

The first electric wire support portion 41 is present in a position at an outside of the defect portion 26 of the surrounding portion 21 in the bus bar housing portion 20, and serves to support the electric wire 64 pulled out in an orthogonal direction to the direction of arrangement of the bus bar holder 50. As shown in Fig. 2, the first electric wire support portion 41 supports only the electric wire 64 of the single voltage detecting harness 60.

Moreover, the second electric wire support portion 42 serves to support the electric wire 64 pulled out of the first electric wire support portion 41 in the direction of arrangement of the bus bar holder 50. As shown in Figs. 2 and 3, the bus bar holders 50 are coupled by means of the coupling mechanism 30 so that the second electric wire support portions 42 provided in the bus bar holders 50 form a wiring path for the electric wire 64 within a range across the bus bar holders 50 which are coupled to each other. The second electric wire support portion 42 supports the electric wires 64 pulled out of each of the voltage detecting harnesses 60.

Furthermore, the first electric wire pressing portion 43 is caught on the electric wire 64 supported on the first electric wire support portion 41 from above. Moreover, the second electric wire pressing portion 44 is caught on the electric wire 64 supported on the second electric wire support portion 42 from above. The first electric wire pressing portion 43 and the second electric wire pressing portion 44 serve to prevent the electric wire 64 from being removed from the support portion.

In addition, the coupling portion 45 serves to couple the surrounding portion 21 of the bus bar housing portion 20 to the second electric wire support portion 42. The first electric wire support portion 41 also functions to couple the surrounding portion 21 to the second electric wire support portion 42.

### <Cover Member>

The cover member 70 is a plate-shaped member for closing, in a lump, each second opening 24 formed by each of the surrounding portions 21 of the bus bar housing portions 20 arranged along the line of the electrodes 81 of the battery cell 8 and an upper open portion of each of the electric wire holding portions 40 in the bus bar holders 50.

In the same manner as the bus bar holder 50, the cover member 70 is a plate-shaped integral molding member formed by a nonconductive resin such as polyamide (PA), polypropylene (PP), polybutylene terephthalate (PBT) or an ABS resin. Accordingly, the cover member 70 is also a nonconductive member. It can also be supposed that the cover member 70 is not the nonconductive member. For example, it can also be supposed that the cover member 70 is a member obtained by carrying out insulating coating over a surface of a conductive member.

The cover member 70 has a first stopping portion 71 and a second stopping portion 72 formed thereon. The first stopping portion 71 is caught on the cover engaging portion 27 of the bus bar housing portion 20. The second stopping portion 72 is pushed against a part of the bus bar housing portion 20. The first stopping portion 71 is caught on the cover engaging portion 27 of the bus bar housing portion 20 while a side surface of the second stopping portion 72 is pushed against an inner side surface of the surrounding portion 21. Consequently, the cover member 70 is held by the bus bar housing portion 20 in a state in which the second opening 24 is closed. In Fig. 1, the second stopping portion 72 is formed on an inner side surface in the cover member 70 and is shown in a hidden line (a broken line).

Moreover, the cover member 70 has a second vent hole 73 formed thereon. The second vent hole 73 is a through hole for communicating with a hollow portion surrounded by each of the surrounding portions 21 of the bus bar housing portions 20, that is, a hollow portion in which each of the electrodes 81 of the battery cells 8 and each of the bus bars 10 are disposed.

As shown in Fig. 3, in the present embodiment, two second vent holes 73 are provided at every bus bar housing portion 20 in non-overlapping positions seen in the air cooling direction R1.

In the bus bar module 1, the first vent hole 11 formed on the bus bar 10 and the second vent hole 73 formed on the cover member 70 are illustrative as ventilation through holes which are formed in portions surrounding each of the hollow portions of the bus bar housing portions 20 in the bus bar 10, the surrounding portion 21 and the cover member 70. The first vent hole 11 and the second vent hole 73 form an air flow path communicating from an upstream side to a downstream side in the predetermined air cooling direction R1 in each of the bus bar housing portions 20.

### <Effect>

In the bus bar module 1, the first vent hole 11 and the second vent hole 73 are present. Consequently, the cooling air reaching the bus bar module 1 via the clearance 82 between the battery cells 8 enters the bus bar housing portion 20 through the first vent hole 11 and is discharged out of the bus bar module 1 through the second vent hole 73. As a result, air permeability in the bus bar housing portion 20 is enhanced and the bus bar 10 is cooled efficiently so that a temperature of the bus bar 10 can be prevented from being raised excessively.

In the present embodiment, particularly, the first vent hole 11 and the second vent hole 73 are formed in the non-overlapping positions seen in the air cooling direction R1. Therefore, air entering the bus bar housing portion 20 from the first vent hole 11 is circulated in the bus bar housing portion 20, and at the same time, is discharged from the second vent hole 73 after heat exchange for the bus bar 10. As a result, the bus bar 10 can be cooled more efficiently.

### <Second Embodiment>

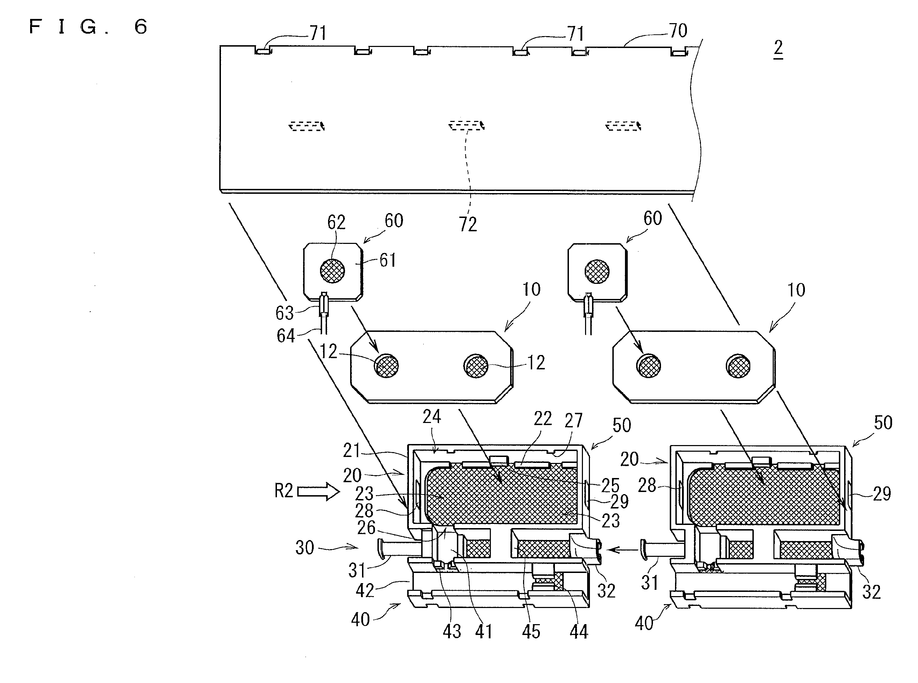

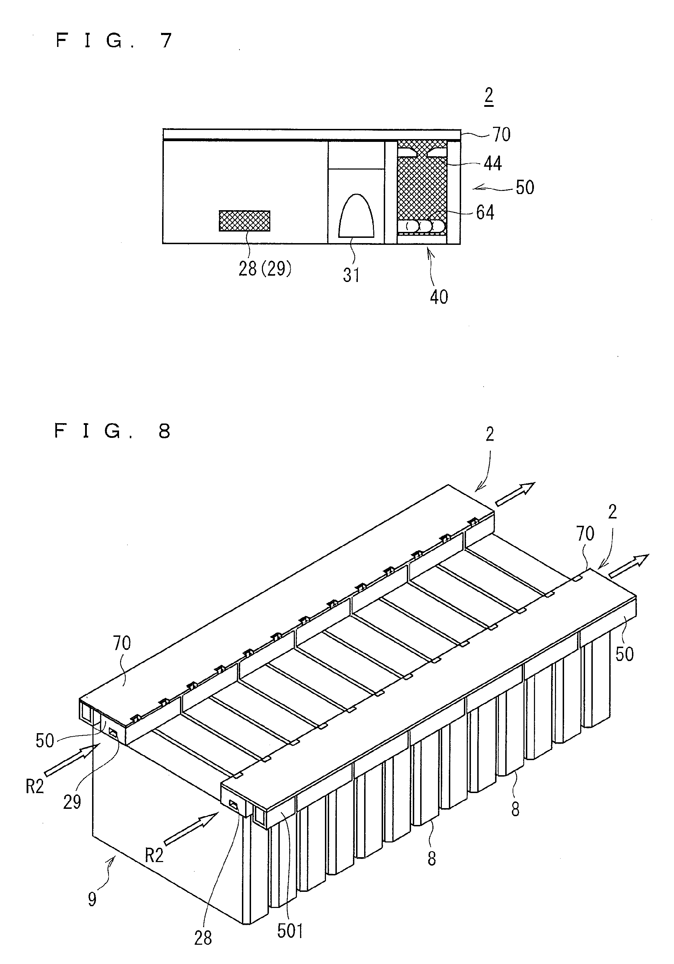

Next, a bus bar module 2 according to a second embodiment of the present invention will be described with reference to Figs. 6, 7 and 8. For convenience, in Figs. 6 and 7, mesh hatching is drawn in a portion of each member constituting the bus bar module 2 in which an opening is formed. In Fig. 6, moreover, a cover member 70 constituting the bus bar module 2 is not shown.

As compared with the bus bar module 1 shown in Fig. 1, the bus bar module 2 according to the second embodiment has a structure in which only a position of a vent hole is different. In Figs. 6 to 8, the same components as those shown in Figs. 1 to 5 have the same reference numerals. Description will be given to only differences of the bus bar module 2 from the bus bar module 1.

As shown in Fig. 8, the bus bar module 2 is attached to a battery pack 9 including a plurality of battery cells 8. The battery pack 9 is cooled by forced air cooling. In Fig. 8, a direction R2 shown in an arrow indicates a direction for sending cooling air to be sprayed onto the battery pack 9 which is a target for attachment of the bus bar module 2.

The air cooling direction R2 of the battery pack 9 which is the target of attachment of the bus bar module 2 is a direction of arrangement of bus bar holders 50, that is, a direction of arrangement of electrodes 81 of battery cells 8. Accordingly, the cooling air sprayed onto the battery pack 9 flows in a longitudinal direction of the whole bus bar module 1.

As shown in Figs. 6 and 7, in the bus bar module 2, neither the first vent hole 11 of the bus bar module 10 nor the second vent hole 73 of the cover member 70 are formed. In the bus bar module 2, instead, a third vent hole 28 and a fourth vent hole 29 which are through holes are formed on portions at upstream and downstream sides in the air cooling direction R2 in a surrounding portion 21 of each of the bus bar housing portions 20. Moreover, the third vent hole 28 and the fourth vent hole 29 are also formed on a bus bar holder 501 for a single electrode which constitutes an end of the bus bar module 2.

Fig. 7 is a front view showing the bus bar module 2 seen in the air cooling direction R2. As shown in Fig. 7, the third vent hole 28 and the fourth vent hole 29 are formed in overlapping positions seen in the air cooling direction R2.

The third vent hole 28 and the fourth vent hole 29 in the bus bar holder 501 for the single electrode and the third vent hole 28 and the fourth vent hole 29 in the bus bar holder 50 form an air flow path communicating from the upstream side to the downstream side in the predetermined air cooling direction R2 in each of the bus bar housing portions 20.

### <Effect>

In the bus bar module 2, the third vent hole 28 and the fourth vent hole 29 are present. Consequently, the cooling air sprayed onto the battery pack 9 enters the bus bar module 2 from the third vent hole 28 or the fourth vent hole 29 at one of ends of the bus bar module 1 and sequentially passes through an inner part of each of the bus bar housing portions 20, and is then discharged from the fourth vent hole 29 or the third vent hole 28 at the other end of the bus bar module 1. As a result, air permeability in each bus bar housing portion 20 is enhanced and the bus bar 10 is efficiently cooled so that a temperature of the bus bar 10 can be prevented from being raised excessively.

### <Others>

In the battery pack 9 to be a target for attachment of the bus bar module according to the present invention, it is also possible to suppose the case in which the air cooling direction is orthogonal to the direction of arrangement of the electrodes 81 in the battery cell 8. In that case, it is preferable to form an vent hole which is a through hole communicating mutually in a portion at the upstream side and a portion at the downstream side in the air cooling direction in the surrounding portion 21 of each of the bus bar housing portions 20 and a portion at the upstream side and a portion at the downstream side in the air cooling direction in each of the electric wire holding portions 40.

### Explanation of Designation

1, 2 bus bar module
8 battery cell
9 battery pack
10 bus bar
11 first vent hole
12 electrode hole
20 bus bar housing portion
21 surrounding portion of bus bar housing portion
22 support portion of bus bar housing portion
23 first opening of bus bar housing portion
24 second opening of bus bar housing portion
25 bus bar engaging portion
26 defect portion of surrounding portion
27 cover engaging portion
28 third vent hole
29 fourth vent hole
30 coupling mechanism
31 protruded portion
32 receiving portion
40 electric wire holding portion
41 first electric wire support portion
42 second electric wire support portion
43 first electric wire pressing portion
44 second electric wire pressing portion
45 coupling portion
50 bus bar holder
60 voltage detecting harness
61 terminal
62 hole
63 crimping portion
64 electric wire
70 cover member
71 first stopping portion
72 second stopping portion
73 second vent hole
81 electrode of battery cell
82 clearance between battery cells
R1, R2 air cooling direction

## Claims

1. A bus bar module comprising:
a plurality of bus bars (10) for electrically connecting electrodes (81) of two adjacent ones of battery cells (8) in a battery pack (9) including said battery cells (8);
a plurality of bus bar housing portions (20) provided for said respective bus bars (10), having a surrounding portion (21) formed cylindrically in a direction in which said electrode (81) is extended from said battery cell (8) around a hollow portion in which said electrode (81) and said bus bar (10) are disposed and a support portion (22) for supporting said bus bar (10) positioned on a first opening (23) formed by the surrounding portion (21), and arranged along a line of said electrodes (81); and
a cover member (70) for closing each second opening (24) formed by said surrounding portion (21) of each of said bus bar housing portions (20),
wherein a plurality of ventilation through holes (11, 73) and (28 and 29) forming an air flow path communicating from an upstream side to a downstream side in predetermined air cooling directions (R1) and (R2) is provided in a portion surrounding each of said hollow portions of said housing portions (20) in said bus bar (10), said surrounding portion (21) and said cover member (70).

2. The bus bar module according to claim 1, wherein said air cooling direction (R1) is a direction in which said electrode (81) is extended from said battery cell (8), and
said ventilation through holes (11, 73) are formed in each of a portion positioned in a clearance between said adjacent battery cells (8) in each of said bus bars (10) and said cover member (70).

3. The bus bar module according to claim 1, wherein said air cooling direction (R2) is a direction of arrangement of said electrodes (81), and
said ventilation through holes (28, 29) are formed in each of a portion at an upstream side and a portion at a downstream side in said air cooling direction (R2) in said surrounding portion (21) in each of said bus bar housing portions (20).
